# FASCICULE DE BREVET EUROPEEN

(11) **EP 1 784 453 B1**
(45) Date de publication et mention de la délivrance du brevet: **10.12.2008**
(21) Numéro de dépôt: 05762567.5
(22) Date de dépôt: 13.05.2005
(51) Int. Cl.: C08L 23/12

(54) **POMPE DE DISTRIBUTION DE PRODUIT FLUIDE PHARMACEUTIQUE**
VERTEILERPUMPE FÜR PHARMAZEUTISCHE FLÜSSIGPRODUKTE
DISTRIBUTION PUMP FOR LIQUID PHARMACEUTICAL PRODUCTS

(30) Priorité: 17.05.2004 FR 0450967
(43) Date de publication de la demande: 16.05.2007
(73) Titulaire: Valois SAS, 27110 Le Neubourg (FR)
(72) Inventeur: FAGOT, Christophe, F-78250 MEZY (FR); DEROUET, André, F-78200 PERDREAUVILLE (FR)
(74) Mandataire: CAPRI
(86) Numéro de dépôt international: PCT/FR2005/050326
(87) Numéro de publication internationale: WO 2005/113673

(56) Documents cités:
- EP-A- 0 714 939
- US-A- 3 256 828

## Description

La présente invention concerne un corps de pompe de distribution de produit fluide destiné à être assemblé sur un réservoir de produit fluide ainsi qu'un procédé de fabrication d'un alliage entrant dans la composition d'un tel corps de pompe.

Un alliage selon l'invention convient particulièrement aux composants thermoplastiques subissant des contraintes mécaniques, statiques ou dynamiques, comme par exemple des corps de pompe.

Les corps de pompe de l'art antérieur sont habituellement réalisés en matériau thermoplastique. Le matériau thermoplastique généralement utilisé est du propylène homopolymère. Le propylène homopolymère résulte de la polymérisation de monomères de propylène formant ainsi une chaîne de propylène. Bien souvent, les corps de pompe sont fabriqués par moulage injection d'un tel polymère. L'utilisation de ce polymère garantit une résistance au choc se situant entre 2 à 3 kJ/m², Cette résistance peut s'avérer insuffisante. En effet, des risques de déformation ou de fissuration peuvent survenir, notamment lors de l'assemblage du corps de pompe dans l'ouverture d'un col de réservoir ou pendant la distribution des corps de pompe avant leur assemblage. Pour palier à ce manque de robustesse, l'utilisation des polypropylènes copolymères, par exemple issus de la copolymérisation de deux monomères tels que du propylène et de l'éthylène, a été envisagée. La résistance au choc de ces matériaux pouvait en effet atteindre 7 à 8 kJ/m². Cependant, ces polypropylènes copolymères ne répondaient pas aux exigences réglementaires régentant l'industrie pharmaceutique et donc n'ont pas pu servir à l'élaboration de corps de pompe destinés à distribuer des produits pharmaceutiques.

La présente invention a pour but de définir un corps de pompe comprenant un alliage thermoplastique qui ne présente pas les inconvénients susmentionnés.

Plus particulièrement, la présente invention a pour but de fournir un corps de pompe résistant au choc, à la pression et à la friction.

La présente invention a encore pour but de fournir un alliage thermoplastique conférant une parfaite étanchéité au composant thermoplastique fabriqué.

La présente invention a aussi pour but de fournir un alliage thermoplastique permettant de réaliser un grand nombre de corps de pompe ayant des propriétés constantes, notamment en ce qui concerne la résistance à la pression hydraulique.

Un autre but de la présente invention est de fournir un corps de pompe simple à fabriquer et de faible coût de revient.

Un autre but de la présente invention est encore de fournir un corps de pompe comprenant un alliage thermoplastique répondant aux exigences réglementaires imposées à l'industrie pharmaceutique.

La présente invention a donc pour objet une pompe de distribution d'un produit fluide pharmaceutique, ladite pompe étant destinée à être assemblée sur un réservoir de produit fluide pharmaceutique, ladite pompe comportant un corps de pompe et un piston coulissant dans ledit corps de pompe, caractérisée en ce que ledit corps de pompe est réalisé en un alliage thermoplastique, ledit alliage comprenant un mélange de polypropylène homopolymère et de polyéthylène haute densité.

Avantageusement, ledit corps de pompe comprend un mélange d'environ 70% à 90% de polypropylène homopolymère et d'environ 10% à 30% de polyéthylène haute densité.

De préférence, ledit corps de pompe comprend un mélange d'environ 85% de polypropylène homopolymère et d'environ 15% de polyéthylène haute densité.

Avantageusement, ledit corps de pompe présente une résistance au choc supérieur à 3kJ/M², avantageusement de l'ordre de 5 à 6 kJ/M².

Avantageusement, ledit corps de pompe présente une résistance moyenne à la pression supérieure à 25 bars et de préférence de l'ordre de 40 bars.

Avantageusement, sur une pluralité de composants identiques, l'écart type de la résistance moyenne à la pression de l'alliage est inférieur à 1,5 bars, de préférence inférieur à 1 bar.

L'invention sera maintenant plus amplement décrite en référence aux dessins joints donnant à titre d'exemples non limitatifs trois modes de réalisation de l'invention.

Sur les figures :
- la figure 1 est un graphique représentant la résistance à la pression hydraulique de corps de pompe moulés avec un alliage selon un mode de réalisation préféré de l'invention,
- la figure 2 est un graphique représentant la résistance à la pression hydraulique de corps de pompe moulés avec un alliage selon un autre mode de réalisation de l'invention,
- la figure 3 est un graphique représentant la résistance à la pression hydraulique de corps de pompe moulés avec un alliage selon un autre mode de réalisation de l'invention,
- la figure 4 est un graphique comparatif représentant la résistance à la pression hydraulique de corps moulés avec un matériau contenant 100% de polypropylène homopolymère.

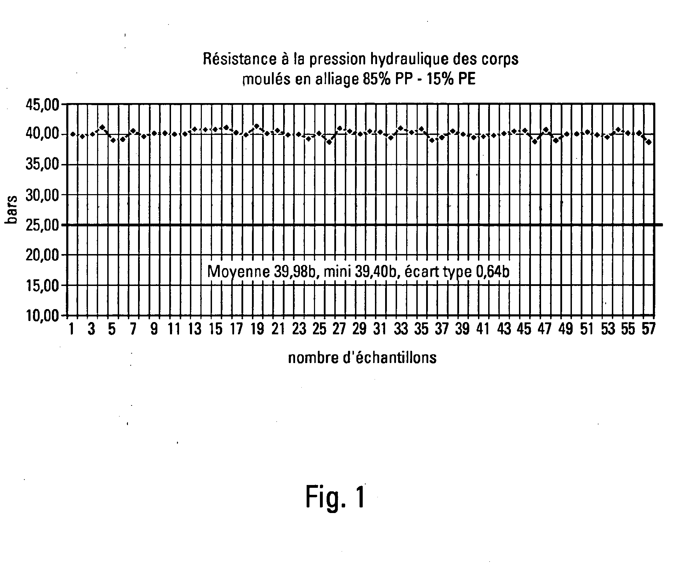

Les graphiques des figures 1 à 3 illustrent la résistance à la pression hydraulique en bars de corps de pompe ou de valve réalisés avec un alliage thermoplastique selon trois modes de réalisation de l'invention. Le tracé de ces graphiques est le résultat de différentes mesures de résistance à la pression hydraulique effectuées sur un certain nombre de corps de pompe. Dans le cas présent, chaque expérience a été menée sur une soixantaine de corps de pompe.

Sur chaque graphique, il peut être noté qu'une ligne s'étend au niveau de la valeur de 25 bars de résistance à la pression hydraulique, En fait, cette valeur correspond approximativement au double de la pression exercée par une pompe en coulissement dans le corps de pompe suite à un actionnement. En effet, une pompe développe approximativement une pression d'une valeur de l'ordre de 12 bars. Ainsi, la ligne de 25 bars peut être assimilée à une marge de sécurité. Dans la pratique, cette marge correspond à une limite inférieure de tolérance de fabrication comparable à un seuil d'acceptabilité du composant fabriqué. Cette limite permet ainsi d'avérer la bonne qualité d'un composant fabriqué, notamment d'un point de vue de sa robustesse.

La figure 1 illustre la résistance à la pression hydraulique de corps de pompe moulés avec un alliage comportant 85% de polypropylène (PP) homopolymère et 15% de polyéthylène (PE) haute densité. Il peut être observé que cet alliage présente une résistance moyenne d'approximativement 40 bars avec une résistance minimale observée à 38,40 bars. En outre, il peut être noté que l'ensemble des valeurs enregistrées se situe bien au-delà de la ligne de 25 bars. L'écart type calculé par rapport à la résistance moyenne est dans ce cas de 0,64 bars. Cet écart type est très faible ce qui bien entendu est synonyme d'une très bonne reproductibilité et répétabilité des valeurs de résistance à la pression hydraulique mesurées.

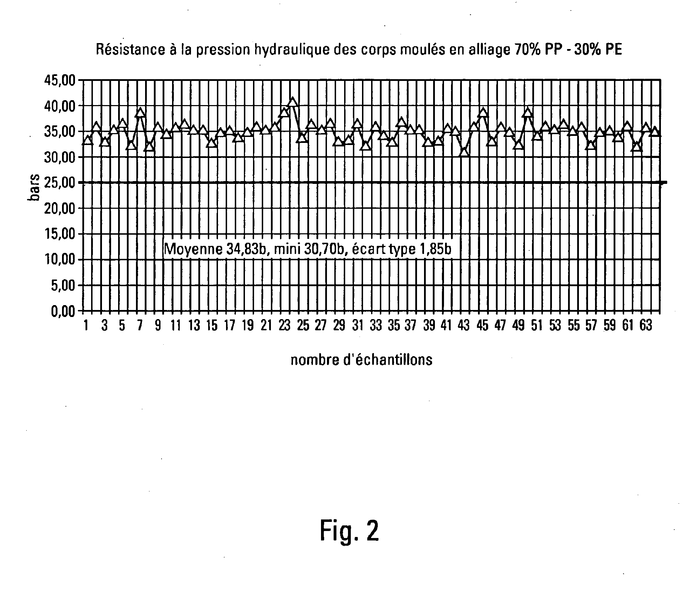

La figure 2 représente la résistance à la pression hydraulique de corps de pompe moulés avec un alliage comportant 70% de polypropylène homopolymère et 30% de polyéthylène haute densité. D'après les résultats obtenus, nous pouvons voir que les valeurs mesurées sont une fois encore unanimement situées au-dessus de la ligne de 25 bars. La résistance moyenne enregistrée est d'approximativement 35 bars et la valeur minimale mesurée de 30,70 bars. De plus, l'écart type calculé est de 1,85 bars ce qui démontre que les valeurs enregistrées fluctuent peu.

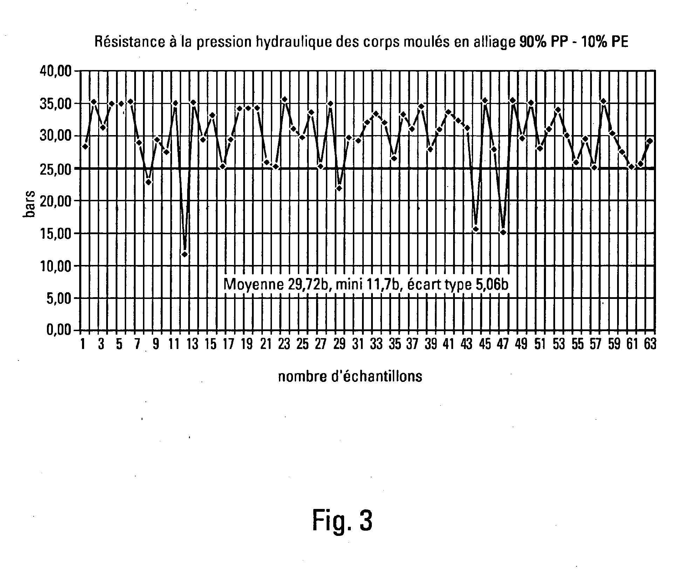

La figure 3 montre la résistance à la pression hydraulique de corps moulés avec un alliage comprenant 90% de polypropylène homopolymère et 10% de polyéthylène haute densité. Comme on peut le voir, la majorité des valeurs de résistance enregistrées se localise au-delà de la ligne de 25 bars ce qui prouve également une très bonne résistance à la pression hydraulique des corps de pompe réalisés avec un tel alliage. Dans ce cas, le minimum de résistance à la pression atteint est de 11,7 bars mais la moyenne générale est de 29,72 bars ce qui reste élevée. En effet, seul cinq mesures sur soixante trois sont enregistrées sous la ligne des 25 bars, les autres valeurs allant approximativement de 25 à 35 bars. Dans ce cas, l'écart type est plus important et atteint la valeur de 5,06 bars. Les résultats sont donc moins reproductibles que lors des tests réalisés respectivement avec l'alliage 70% de PP homopolymère et 30% de PE haute densité et avec l'alliage 85% de PP homopolymère et 15% de PP haute densité, mais s'avèrent tout de même assez satisfaisant.

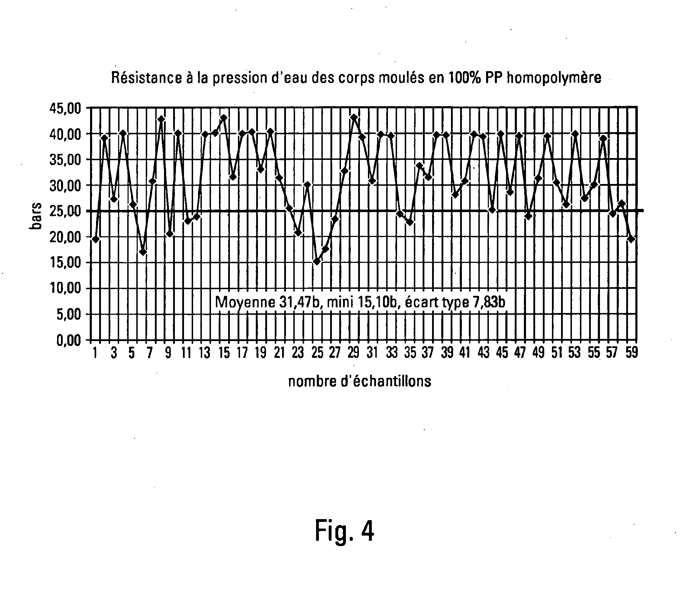

Enfin, la figure 4 représente la résistance à la pression hydraulique de corps de pompe réalisée selon l'art antérieur par moulage avec 100% de polypropylène homopolymère. Cette figure sert donc ici de tracé comparatif par rapport aux tracés précédemment décrits. Dans ce cas, il peut tout d'abord être remarqué une grande disparité dans les valeurs relevées ce qui se traduit par un écart type considérable de 7,83 bars. En outre, treize valeurs de résistance à la pression hydraulique se situent sous la ligne des 25 bars ce qui est de loin le plus mauvais résultat obtenu par rapport aux alliages testés. La moyenne des valeurs enregistrées est dans ce cas de 31,47 bars pour une valeur minimale de 15,10 bars.

Par conséquent, l'utilisation d'un alliage selon l'invention comprenant du polypropylène homopolymère et du polyéthylène haute densité a pour avantage de mieux contrôler les valeurs de résistance à la pression hydraulique mesurée. En d'autres termes, les valeurs de résistance mesurées sont distribuées de façon moins aléatoire et sont ainsi plus constantes. Ainsi, dans le cas d'un alliage de polypropylène homopolymère et de polyéthylène haute densité on peut observer une très faible amplitude entre la valeur minimale et la valeur maximale enregistrée. Ceci est particulièrement vrai pour un alliage comprenant 85% de polypropylène homopolymère et 15% de polyéthylène haute densité avec lequel les valeurs mesurées sont très proches les unes des autres et s'étendent généralement entre approximativement 39 et 41 bars. Les composants réalisés avec cet alliage présentent donc des performances et des propriétés particulièrement constantes.

De plus, la valeur moyenne de résistance à la pression hydraulique notamment pour les alliages 85% de PP homopolymère et 15% de PE haute densité et les alliages 70% de PP homopolymère et 30% de PE haute densité s'avère bien supérieure à la valeur moyenne obtenue pour les corps de pompe de l'art antérieur. Par conséquent, l'utilisation d'un alliage de polypropylène homopolymère et de polyéthylène haute densité confère de manière générale une plus grande résistance à la pression hydraulique des corps de pompe fabriqués et donc une solidité supérieure avec moins de rebus lors de la fabrication, de l'assemblage et/ou de l'utilisation.

Il peut être remarqué qu'un alliage selon l'invention présente une résistance aux chocs supérieure à 3 kJ/m², avantageusement de l'ordre de 5 à 6kJ/m², ce qui permet ainsi de doubler la résistance aux chocs précédemment obtenus avec les matériaux de l'art antérieur, en particulier le PP homopolymère. En outre, il est à préciser que l'alliage selon l'invention peut sans problème être utilisé dans le cadre d'activités pharmaceutiques, le PP homopolymère et le PE haute densité étant agrées à cet effet.

Le procédé mis en oeuvre pour fabriquer un tel alliage thermoplastique comprend l'étape de mélanger à posteriori (c'est-à-dire après polymérisation séparée des deux composants) et de façon mécanique du polypropylène homopolymère et du polyéthylène haute densité.

Il est à noter qu'un tel alliage s'applique particulièrement bien aux corps de pompe car ces corps subissent des frictions, des pressions ou des chocs importants. Ainsi, un tel alliage répond parfaitement aux exigences de résistance au choc et/ou de glissement et/ou d'étanchéité des corps de pompe.

Un alliage selon l'invention contribue à améliorer les performances des composants qu'il forme, notamment en réduisant les risques de fuites entre le corps de pompe et le piston d'une pompe. Cet avantage est obtenu grâce à une meilleure aptitude à la déformation du corps en regard de la propre géométrie du piston.

Bien que la présente invention ait été décrite en référence à plusieurs variantes de réalisation de celle-ci, il est entendu qu'elle ne se limite pas à ces exemples représentés, mais qu'au contraire un homme du métier peut y apporter toutes modifications utiles sans sortir du cadre de la présente invention telle que défini par les revendications annexées.

## Revendications

1. Pompe de distribution d'un produit fluide pharmaceutique, ladite pompe étant destinée à être assemblée sur un réservoir de produit fluide pharmaceutique, ladite pompe comportant un corps de pompe et un piston coulissant dans ledit corps de pompe, **caractérisée en ce que** ledit corps de pompe est réalisé en un alliage thermoplastique, ledit alliage comprenant un mélange de polypropylène homopolymère et de polyéthylène haute densité.

2. Pompe selon la revendication 1, comprenant un mélange d'environ 70% à 90% de polypropylène homopolymère et d'environ 10% à 30% de polyéthylène haute densité.

3. Pompe selon la revendication 1 ou 2, comprenant un mélange d'environ 85% de polypropylène homopolymère et d'environ 15% de polyéthylène haute densité.

4. Pompe selon la revendication 1, 2 ou 3, dans laquelle ledit alliage présente une résistante aux chocs supérieure à 3kJ/M², avantageusement de l'ordre de 5 à 6 kJ/M².

5. Pompe selon l'une quelconque des revendications précédentes, dans laquelle ledit alliage présente une résistance moyenne à la pression supérieure à 25 bars, et de préférence de l'ordre de 40 bars.

6. Pompe selon l'une quelconque des revendications précédentes, dans laquelle, sur une pluralité de composants identiques, l'écart type de la résistance moyenne à la pression de l'alliage est inférieur à 1,5 bars, de préférence inférieur à 1 bar.

## Claims

1. A fluid dispenser pump for pharmaceuticals, said pump being assembled on a pharmaceutical fluid reservoir, said pump comprising a pump body and a piston sliding inside said pump body, the pump body being **characterized in that** it is made of a thermoplastic alloy, said alloy comprising a mixture of polypropylene homopolymer and of high-density polyethylene.

2. A pump according to claim 1, comprising a mixture of about 70% to 90% polypropylene homopolymer and about 10% to 30% high-density polyethylene.

3. A pump according to claim 1 or claim 2, comprising a mixture of about 85% polypropylene homopolymer and about 15% high-density polyethylene.

4. A pump according to claim 1, 2, or 3, in which said alloy presents resistance to impacts greater than 3 kJ/m², advantageously of the order of 5 kJ/m² to 6 kJ/m².

5. A pump according to any preceding claim, in which said alloy presents mean resistance to pressure greater than 25 bars, and preferably about 40 bars.

6. A pump according to any preceding claim, in which, over a plurality of identical components, the standard deviation in the mean resistance to pressure of the alloy is less than 1.5 bars, preferably less than 1 bar.

## Patentansprüche

1. Abgabepumpe für ein pharmazeutisches Flüssigprodukt, wobei die Pumpe dazu bestimmt ist, auf einem Vorratsbehäl ter für pharmazeutisches Flüssigprodukt angebracht zu werden, wobei die Pumpe einen Pumpenkörper und einen Kolben aufweist, der in dem Pumpenkörper gleitet, **dadurch gekennzeichnet, dass** der Pumpenkörper aus einer thermoplastischen Legierung verwirklicht ist, wobei die Legierung ein Gemisch aus einem homopolymeren Polypropylen und einem hochdichten Polyethylen umfasst.

2. Pumpe nach Anspruch 1, aufweisend ein Gemisch aus in etwa 70% bis 90% homopolymerem Polypropylen und in etwa 10% bis 30% hochdichtem Polyethylen.

3. Pumpe nach Anspruch 1 oder 2, aufweisend ein Gemisch aus in etwa 85% homopolymerem Polypropylen und in etwa 15% hochdichtem Polyethylen.

4. Pumpe nach Anspruch 1, 2 oder 3, wobei die Legierung eine Schockbeständigkeit größer als 3 kJ/M², vorteilhafterweise in der Größenordnung von 5 bis 6 kJ/M² aufweist.

5. Pumpe nach einem der vorangehenden Ansprüche, wobei die Legierung eine mittlere Druckbeständigkeit größer als 25bar und bevorzugt in der Größenordung von 40 bar aufweist.

6. Pumpe nach einem der vorangehenden Ansprüche, wobei bei einer Mehrzahl identischer Bestandteile die typische Abweichung der mittleren Druckbeständigkeit der Legierung kleiner ist als 1,5 bar, bevorzugt kleiner als 1 bar.
